# DEMANDE DE BREVET EUROPEEN

(11) **EP 2 957 460 A1**
(43) Date de publication de la demande: **23.12.2015**
(21) Numéro de dépôt: 15171352.6
(22) Date de dépôt: 10.06.2015
(51) Int. Cl.: B60N 2/68, B60N 2/20, B60N 2/225

(54) **SIÈGE DE VÉHICULE, À BOÎTIER D'INTERFACE REMPLAÇANT UN MÉCANISME D'ACCÈS À DES PLACES ARRIÈRE**

(30) Priorité: 17.06.2014 FR 1455518
(71) Demandeur: PEUGEOT CITROËN AUTOMOBILES SA, 78140 Vélizy-Villacoublay (FR)
(72) Inventeur: FOMPERINE, Stephan, 94440 Villecresnes (FR); VERCAYGNE-BAT, Guy Noel, CV8 2DW, Kenilworth (GB); PINTO TEIXEIRA, Frederic, 91160 Ballainvilliers (FR)

(57) **Abrégé**

Un siège (SI), de véhicule, comprend une armature d'assise (AA), une armature de dossier (AD), un mécanisme de réglage d'inclinaison (MR) comprenant une partie fixe couplée à l'armature d'assise (AA) et une partie rotative couplée à l'armature de dossier (AD), et un boîtier d'interface (BI) solidarisé fixement à l'armature de dossier (AD) et à la partie rotative du mécanisme de réglage d'inclinaison (MR) à la place d'un mécanisme d'accès à des places arrière (MA) présentant des dimensions similaires.

## Description

L'invention concerne les sièges de véhicules, et plus précisément ceux qui sont équipés d'un mécanisme de réglage d'inclinaison (ou d'orientation) de type dit continu.

Dans ce qui suit, on entend par « siège » un équipement comprenant une armature d'assise, destinée à être montée directement ou indirectement (via des piètements et/ou des glissières) sur un support (comme par exemple un plancher de véhicule, éventuellement de type automobile), et au moins une armature de dossier, montée à rotation sur l'assise via un mécanisme de réglage d'inclinaison (ou d'orientation). Par conséquent, l'invention concerne aussi bien les sièges de type monoplace que les sièges de type banquette.

Par ailleurs, dans ce qui suit, on entend par « mécanisme de réglage d'inclinaison de type continu » un mécanisme permettant à un usager de régler de façon continue l'inclinaison (ou l'orientation) du dossier par rapport à l'assise, sans permettre un découplage entre ce dossier et cette assise en vue d'un basculement instantané. Un tel basculement instantané nécessite alors une association à un autre mécanisme dit d'accès à des places arrière.

Enfin, dans ce qui suit, on entend par « mécanisme de réglage d'inclinaison de type discontinu » un mécanisme permettant à un usager de régler de façon discontinue l'inclinaison (ou l'orientation) du dossier par rapport à l'assise, grâce à un découplage entre ce dossier et cette assise qui autorise également un basculement instantané sans qu'il faille l'associer à un mécanisme spécifique d'accès à des places arrière.

De nombreux véhicules, généralement de type automobile, comprennent soit deux portes avant donnant accès à un rang avant de sièges et à un rang arrière de sièges, soit deux portes avant et au moins deux portes arrière donnant respectivement accès à un rang avant de sièges et à au moins un rang arrière de sièges. Dans le premier cas précité, les sièges du rang avant comprennent, comme indiqué ci-avant, un mécanisme spécifique permettant de faire basculer instantanément leurs dossiers afin de permettre l'accès aux places arrière. Ce mécanisme d'accès aux places arrière est intercalé entre l'armature de dossier et le mécanisme de réglage d'inclinaison, et comprend une partie fixe solidarisée fixement à la partie rotative de ce mécanisme de réglage d'inclinaison et une partie mobile solidarisée fixement à cette armature de dossier.

Dans le second cas précité, les sièges du rang avant n'ont pas besoin de comprendre de mécanisme d'accès aux places arrière. Par conséquent, le mécanisme de réglage d'inclinaison comprend une partie fixe, solidarisée fixement à l'armature d'assise ou à un flasque intermédiaire qui est lui-même solidarisé fixement à l'armature d'assise, et une partie rotative, solidarisée fixement à l'armature de dossier.

En raison de cette différence entre les sièges des premier et second cas, quasiment aucune des pièces d'un siège du premier cas ne peut être également utilisée telle quelle pour constituer un siège du second cas. C'est en particulier le cas de l'armature d'assise (ou du flasque intermédiaire qui est solidarisé fixement à l'armature d'assise), de l'armature de dossier, et du mécanisme de réglage d'inclinaison, mais également du garnissage de dossier (qui est solidarisé fixement à l'armature de dossier), de la housse de dossier (qui entoure la garnissage), et du carter extérieur (qui est solidarisé fixement à l'armature d'assise sur un côté extérieur comportant le mécanisme de réglage d'inclinaison, et du carter intérieur (qui est solidarisé fixement à l'armature d'assise ou à un flasque intermédiaire). Cette situation induit une augmentation sensible du coût des sièges et du nombre de pièces à gérer tant en usine qu'en service après-vente.

L'invention a donc pour but d'améliorer la situation.

Elle propose notamment à cet effet un siège destiné à équiper un véhicule et comprenant une armature d'assise, une armature de dossier, et un mécanisme de réglage d'inclinaison comprenant une partie fixe couplée à l'armature d'assise et une partie rotative couplée à l'armature de dossier.

Ce siège se caractérise par le fait qu'il comprend également un boîtier d'interface solidarisé fixement à l'armature de dossier et à la partie rotative du mécanisme de réglage d'inclinaison à la place d'un mécanisme d'accès à des places arrière présentant des dimensions similaires.

Ainsi, la quasi-totalité des pièces qui constituent un siège destiné à équiper un véhicule à deux portes avant et au moins deux portes arrière (donnant respectivement accès à un rang avant de sièges et au moins un rang arrière de sièges) peuvent être également utilisées pour constituer un siège destiné à équiper un véhicule à deux portes avant (donnant accès à un rang avant de sièges et un rang arrière de sièges), ce qui s'avère particulièrement économique et simplifie notablement la gestion des pièces.

Le siège selon l'invention peut comporter d'autres caractéristiques qui peuvent être prises séparément ou en combinaison, et notamment :
- il peut également comprendre deux flasques intermédiaires solidarisés fixement à l'armature d'assise et, pour l'un d'entre eux, à la partie fixe du mécanisme de réglage d'inclinaison. En variante, l'armature d'assise peut être solidarisée fixement à la partie fixe du mécanisme de réglage d'inclinaison ;
- il peut également comprendre un garnissage solidarisé fixement à l'armature de dossier ;
- il peut également comprendre un carter extérieur couplé à l'armature d'assise sur un côté extérieur comportant le mécanisme de réglage d'inclinaison, et un carter intérieur solidarisé fixement à l'armature d'assise sur un côté intérieur opposé à ce côté extérieur.

L'invention propose également un véhicule, éventuellement de type automobile, et comprenant au moins deux portes avant et deux portes arrière donnant respectivement accès à un rang avant de sièges, dont l'un au moins est du type de celui présenté ci-avant, et à au moins un rang arrière de sièges.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue de côté dans un plan XZ (du côté extérieur), une partie d'un siège de véhicule selon l'invention, avec les boîtier d'interface et mécanisme d'accès aux places arrière matérialisés ensemble pour faciliter la compréhension,
- la figure 2 illustre schématiquement, dans une vue en coupe selon l'axe II-II de la figure 1, la partie du siège de la figure 1, avec en complément un garnissage de dossier et un carter extérieur,
- la figure 3 illustre schématiquement, dans une vue en coupe selon l'axe III-III de la figure 1 (plan XY), la partie du siège de la figure 1, avec en complément le carter extérieur, et
- la figure 4 illustre schématiquement, dans une vue en coupe selon l'axe IV-IV de la figure 1 (plan XY), la partie du siège de la figure 1, avec en complément le garnissage de dossier et le carter extérieur.

L'invention a notamment pour but de proposer un siège SI destiné à équiper un véhicule comportant deux portes avant et au moins deux portes arrière donnant respectivement accès à un rang avant de sièges et à au moins un rang arrière de sièges.

On considère dans ce qui suit, à titre d'exemple non limitatif, que le siège SI est destiné à équiper un véhicule de type automobile, comme par exemple une voiture. Mais l'invention n'est pas limitée à ce type de véhicule. Elle concerne en effet tout véhicule comportant deux portes avant et au moins deux portes arrière donnant respectivement accès à un rang avant de sièges et à au moins un rang arrière de sièges.

Par ailleurs, on considère dans ce qui suit, à titre d'exemple non limitatif, que le siège SI est de type monoplace. Mais l'invention n'est pas limitée à ce type de siège. Elle concerne en effet tout type de siège pouvant accueillir, en position assise, au moins une personne. Par conséquent, il pourra également s'agir d'une banquette comportant au moins un dossier.

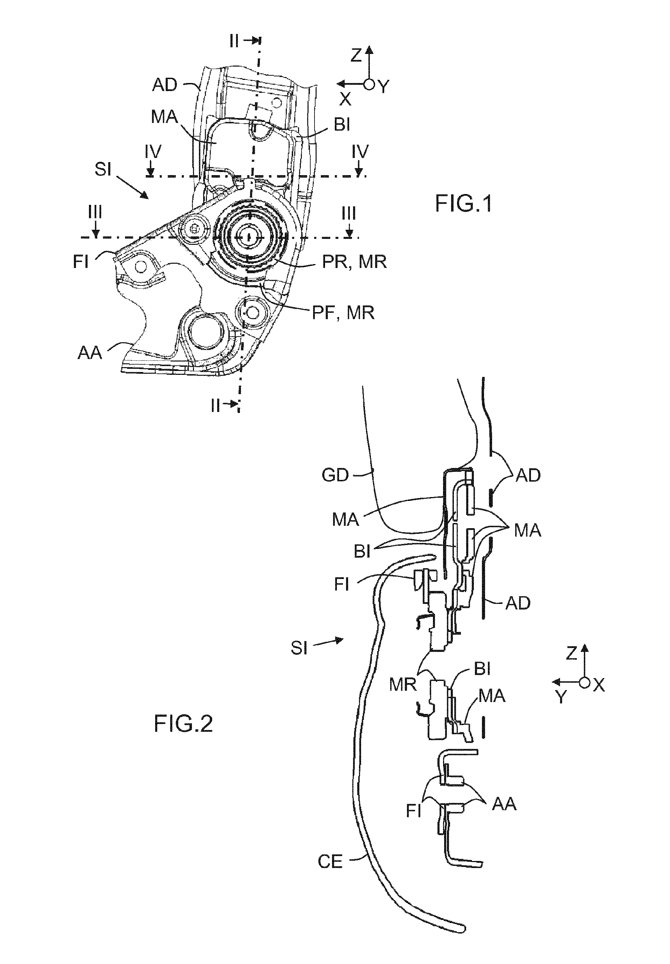

On a schématiquement illustré sur la figure 1 une petite partie d'un exemple de réalisation d'un siège SI selon l'invention.

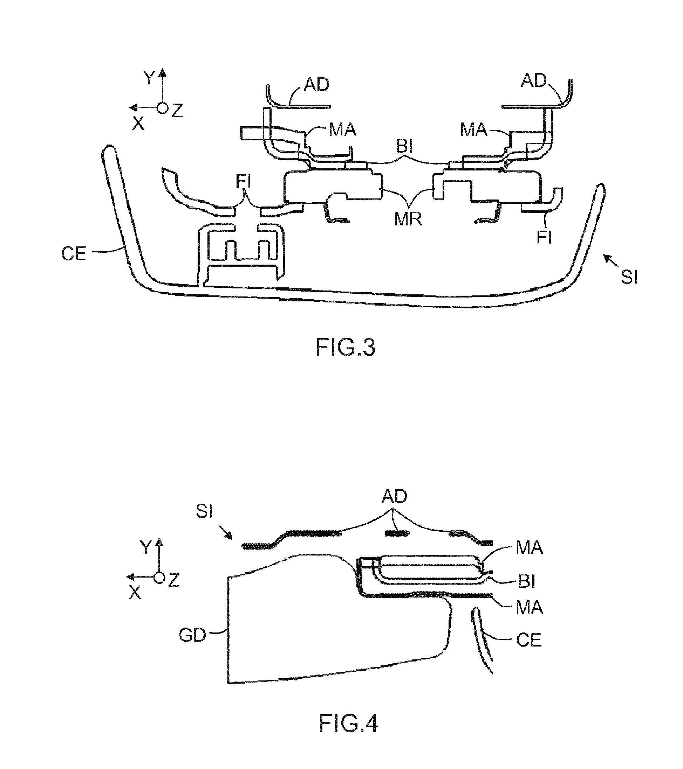

Sur les figures 1 à 4, la direction X est la direction longitudinale du véhicule (et donc du siège SI), laquelle est sensiblement parallèle aux côtés latéraux comportant les portières latérales, la direction Y est la direction transversale du véhicule, laquelle est perpendiculaire à la direction X, et la direction Z est la direction verticale du véhicule, laquelle est perpendiculaire aux directions longitudinale X et transversale Y.

Comme illustré partiellement sur la figure 1, un siège SI, selon l'invention comprend, notamment, une armature de dossier AD montée à rotation sur une armature d'assise AA, directement ou indirectement, un mécanisme de réglage d'inclinaison MR et un boîtier d'interface BI.

L'armature d'assise AA, très partiellement illustrée sur les figures 1 à 4, est destinée à faire partie de l'assise du siège SI avec un garnissage d'assise (non représenté) et une éventuelle housse (non représentée). Cette assise est par exemple montée indirectement (via des piètements et/ou des glissières) sur un plancher d'un véhicule.

L'armature de dossier AD, également très partiellement illustrée sur les figures 1 à 4, est destinée à faire partie du dossier du siège SI avec un garnissage de dossier GD (voir figures 2 à 4) et une éventuelle housse (non représentée).

Le mécanisme de réglage d'inclinaison (ou d'orientation) MR comprend une partie fixe PF couplée à l'armature d'assise AA et une partie rotative PR couplée à l'armature de dossier AD. Ce mécanisme de réglage d'inclinaison MR est de type continu de manière à permettre à un usager de régler de façon continue l'orientation du dossier par rapport à l'assise, sans permettre un découplage entre ce dossier et cette assise en vue d'un basculement instantané destiné à permettre un accès aux places arrière.

On notera que dans l'exemple non limitatif illustré sur les figures 1 à 4, le siège SI comprend optionnellement un flasque intermédiaire externe FI qui est solidarisé fixement à la partie fixe PF du mécanisme de réglage d'inclinaison MR et à l'armature d'assise AA (et plus précisément à un flasque d'assise situé sur un côté longitudinal externe). Dans ce cas, le siège SI comprend également un flasque intermédiaire interne (non représenté) qui est solidarisé fixement à l'armature d'assise AA (et plus précisément à un flasque d'assise situé sur un côté longitudinal interne, opposé au côté longitudinal externe) et couplé à rotation à un axe de rotation transversal (suivant Y).

Mais dans une variante de réalisation non illustrée, l'armature d'assise AA peut être solidarisée fixement à la partie fixe PF du mécanisme de réglage d'inclinaison MR. En fait, dans ce cas, la partie fixe PF du mécanisme de réglage d'inclinaison MR est solidarisée fixement à un flasque d'assise situé sur un côté longitudinal externe. L'armature d'assise AA comprend alors également un autre flasque d'assise situé sur un côté longitudinal interne et couplé à rotation à un axe de rotation transversal (suivant Y).

Comme cela apparaît sur les figures 2 à 4, le mécanisme de réglage d'inclinaison MR est masqué par un carter extérieur CE qui est solidarisé fixement au flasque d'assise externe ou à l'éventuel flasque intermédiaire externe FI. On notera que ce carter extérieur CE masque également l'éventuel flasque intermédiaire externe FI et le boîtier d'interface BI. On notera également que le siège SI comprend un carter interne (non représenté) solidarisé fixement au flasque d'assise interne ou à l'éventuel flasque intermédiaire interne (sur le côté longitudinal interne qui est opposé au côté longitudinal externe où est situé le mécanisme de réglage d'inclinaison MR).

Le boîtier d'interface BI est solidarisé fixement à l'armature de dossier AD et à la partie rotative PR du mécanisme de réglage d'inclinaison MR, à la place d'un mécanisme d'accès à des places arrière MA présentant des dimensions similaires.

Il est rappelé qu'un mécanisme d'accès à des places arrière MA est agencé de manière à découpler le dossier de l'assise d'un siège avant afin de permettre un basculement instantané de ce dossier destiné à permettre à un passager d'accéder aux places situées derrière ce siège avant lorsque le véhicule ne comporte que deux portes avant.

Le boîtier d'interface BI peut être réalisé en métal ou bien en matière plastique ou synthétique résistante et rigide.

On notera que sur les figures 1 à 4 le boîtier d'interface BI et le mécanisme d'accès aux places arrière MA sont matérialisés tous les deux afin de faciliter la compréhension de l'invention. Mais dans la réalité un siège SI équipant un véhicule comportant deux portes avant et au moins deux portes arrière comprend un boîtier d'interface BI mais pas de mécanisme d'accès aux places arrière MA, tandis qu'un véhicule comportant seulement deux portes avant comprend un mécanisme d'accès aux places arrière MA mais pas de boîtier d'interface BI.

Grâce à l'invention, la quasi-totalité des pièces qui constituent un siège SI destiné à équiper un véhicule à deux portes avant et au moins deux portes arrière (donnant respectivement accès à un rang avant de sièges et à au moins un rang arrière de sièges) peuvent être également utilisées pour constituer un siège destiné à équiper un véhicule à deux portes avant (donnant accès à un rang avant de sièges et à un rang arrière de sièges). C'est en particulier le cas de l'armature de dossier AD, de l'armature d'assise AA, des éventuels flasques intermédiaires FI, du mécanisme de réglage d'inclinaison MR, du carter extérieur CE, du carter intérieur, du garnissage de dossier GD, de l'éventuelle housse de dossier, du garnissage d'assise et de l'éventuelle housse d'assise. Il en résulte une réduction notable des coûts des sièges et une simplification notable de la gestion des pièces de ces sièges, du fait de la réduction de la diversité.

On comprendra donc qu'à partir du même stock de pièces de siège on peut constituer soit un siège SI pour un véhicule à deux portes avant et au moins deux portes arrière en assemblant (notamment) une armature de dossier AD, une armature d'assise AA, des éventuels flasques intermédiaires FI, un mécanisme de réglage d'inclinaison MR, un boîtier d'interface BI, un carter extérieur CE, un carter intérieur, un garnissage de dossier GD, une éventuelle housse de dossier, un garnissage d'assise et une éventuelle housse d'assise, soit un siège pour un véhicule à deux portes avant en assemblant (notamment) une armature de dossier AD, une armature d'assise AA, des éventuels flasques intermédiaires FI, un mécanisme de réglage d'inclinaison MR, un mécanisme d'accès aux places arrière MA (en lieu et place du boîtier d'interface BI), un carter extérieur CE, un carter intérieur, un garnissage de dossier GD, une éventuelle housse de dossier, un garnissage d'assise et une éventuelle housse d'assise.

On comprendra également que pour obtenir un résultat aussi avantageux les forme et dimensions du boîtier d'interface BI doivent être sensiblement identiques, aux jeux fonctionnels près, aux formes et dimensions du mécanisme d'accès aux places arrière MA.

Le garnissage de dossier GD est par exemple réalisé dans une mousse synthétique légèrement molle. Il est solidarisé fixement à l'armature de dossier AD. Le garnissage d'assise est par exemple réalisé dans une mousse synthétique légèrement molle (éventuellement un peu plus molle que celle utilisée pour le garnissage de dossier GD). Il est solidarisé fixement à l'armature d'assise AA.

## Revendications

1. Siège (SI) de véhicule, comprenant une armature d'assise (AA), une armature de dossier (AD), et un mécanisme de réglage d'inclinaison (MR) comprenant une partie fixe couplée à ladite armature d'assise (AA) et une partie rotative couplée à ladite armature de dossier (AD), **caractérisé en ce qu'**il comprend en outre un boîtier d'interface (BI) solidarisé fixement à ladite armature de dossier (AD) et à ladite partie rotative du mécanisme de réglage d'inclinaison (MR) à la place d'un mécanisme d'accès à des places arrière (MA) présentant des dimensions similaires.

2. Siège selon la revendication 1, **caractérisé en ce qu'**il comprend en outre deux flasques intermédiaires (FI) solidarisés fixement à l'armature d'assise (AA) et, pour l'un d'entre eux, à ladite partie fixe du mécanisme de réglage d'inclinaison (MR).

3. Siège selon la revendication 1, **caractérisé en ce que** ladite armature d'assise (AA) est solidarisée fixement à ladite partie fixe du mécanisme de réglage d'inclinaison (MR).

4. Siège selon l'une des revendications 1 à 3, **caractérisé en ce qu'**il comprend en outre un garnissage (GD) solidarisé fixement à ladite armature de dossier (AD).

5. Siège selon l'une des revendications 1 à 4, **caractérisé en ce qu'**il comprend en outre un carter extérieur (CE) couplé à ladite armature d'assise (AA) sur un côté extérieur comportant ledit mécanisme de réglage d'inclinaison (MR), et un carter intérieur solidarisé fixement à ladite armature d'assise (AA) sur un côté intérieur opposé audit côté extérieur.

6. Véhicule à au moins deux portes avant et deux portes arrière donnant respectivement accès à un rang avant de sièges et à au moins un rang arrière de sièges, **caractérisé en ce que** ledit rang avant comprend au moins un siège (SI) selon l'une des revendications précédentes.

7. Véhicule selon la revendication 6, **caractérisé en ce qu'**il est de type automobile.
